Europäisches Patentamt

(19) European Patent Office

Office européen des brevets

(11) Veröffentlichungsnummer: **0 029 611**
**B1**

(12) **EUROPÄISCHE PATENTSCHRIFT**

(45) Veröffentlichungstag der Patentschrift:
**31.07.85**

(51) Int. Cl.⁴: **G 02 B 5/124,** B 29 D 11/00

(21) Anmeldenummer: **80107347.9**

(22) Anmeldetag: **25.11.80**

(54) **Retroreflektorplatte.**

(30) Priorität: **27.11.79 DE 2947719**
**27.03.80 DE 3011955**

(43) Veröffentlichungstag der Anmeldung:
**03.06.81 Patentblatt 81/22**

(45) Bekanntmachung des Hinweises auf die Patenterteilung:
**31.07.85 Patentblatt 85/31**

(84) Benannte Vertragsstaaten:
**AT BE CH DE FR GB IT LI LU NL SE**

(56) Entgegenhaltungen:
**DE - A - 666 028**
**FR - A - 860 459**
**GB - A - 445 069**
**US - A - 2 330 097**

(73) Patentinhaber: **D. Swarovski & Co., Postfach 15,
A-6112 Wattens (AT)**

(72) Erfinder: **Schwab, Kurt, Dr., Heiderichweg 5, A-6060 Mils
(AT)**

(74) Vertreter: **Kador . Klunker . Schmitt-Nilson . Hirsch,
Corneliusstrasse 15, D-8000 München 5 (DE)**

BUNDESDRUCKEREI BERLIN

## Beschreibung

Die Erfindung bezieht sich auf eine Retroreflektorplatte.

Es sind Retroreflektorplatten bekannt, bei denen eine Vielzahl von Kugelrückstrahlelementen aus Glas in eine Kunststoffplatte eingesetzt und zusammengefaßt sind. Nachteilig bei diesen bekannten Retroreflektorplatten ist zum einen, daß deren Herstellung aus vielen einzelnen Kugelrückstrahlelementen und deren Einsetzen in eine Kunststoffplatte aufwendig ist.

Bedeutend schwerwiegender ist jedoch der geringe Lichtwert der bekannten Retroreflektorplatten. Retroreflektoren, die im Straßenverkehr eingesetzt werden, müssen auch schräg einfallende Lichtstrahlen, insbesondere innerhalb den von den Behörden vorgeschriebenen Winkelbereichen, retroreflektieren können. Dies ist bei den bekannten Reflektoren nur dadurch zu erreichen, daß der Durchmesser der Reflexionsfläche des einzelnen Kugelrückstrahlelementes größer gewählt wird als jener der Lichteintrittsfläche. Dies führt dazu, daß die einzelnen Elemente bezüglich der Lichteintrittsseite nicht lückenlos aneinandergesetzt werden können. Zum anderen kommt dazu, daß zwischen den einzelnen Reflektoren auch auf der Reflektorseite Kunststoffstege vorgesehen sein müssen, damit die erforderliche Einbettung der Elemente in der Kunststoffplatte gewährleistet ist. Dadurch tritt eine weitere erhebliche Verringerung der optisch wirksamen Fläche auf. Bei den in der Praxis bekannten Retroreflektorplatten wird aus den vorgenannten Gründen nur lediglich etwa ein Drittel der Gesamtfläche optisch genutzt bzw. ist optisch wirksam. Ein lückenloses Aneinanderfügen der einzelnen Kugelrückstrahlelemente würde andererseits dazu führen, daß die Konfiguration der einzelnen Reflexionsflächen jener der Lichteintrittsflächen entsprechen müßte, so daß die geforderten Winkelwerte nicht erreicht werden könnten.

Aus der DE-A-1 622 012 ist ein Reflektor bekanntgeworden, der weder auf der Vorderseite noch auf der Rückseite eine volle Auslegung mit Lichteintritts- bzw. Reflexionsflächen aufweist, vielmehr liegen zwischen den Flächen optisch inaktive Bereiche. Dadurch ergibt sich zwangsläufig ein verringerter Lichtwert. Hinzu kommt, daß die Lichteintrittsflächen gleiche Ausgestaltung wie die Reflexionsflächen aufweisen. Schräg einfallende Lichtstrahlen, die nicht mehr auf die Reflexionsfläche treffen, können nicht mehr reflektiert werden. Mit einer solchen Ausgestaltung kann somit keine Reflexion in einem Weitwinkelbereich erzielt werden.

Der in der AT-PS 332 763 beschriebene Reflektor zeigt zwar eine volle Flächenauslegung, ist jedoch bezüglich der Winkelwerte gleichermaßen nicht zufriedenstellend, da bei diesem Reflektor genauso wenig schräg einfallende Lichtstrahlen retroreflektiert werden.

Der in der DE-OS 1 932 259 beschriebene Reflektor ist bezüglich des Reflexionswinkelbereichs besser, da die Reflexionsflächen größer ausgestaltet sind als die Lichteintrittsflächen. Mit solchen Reflektorelementen ist jedoch eine volle Auslegung der Lichteintrittsseite nicht möglich, wenn die Reflexionsflächen voll ausgebildet sein sollen, so daß dann optisch nicht wirksame Bereiche auf der Lichteintrittsseite vorliegen, die zu einem verringerten Lichtwert führen.

In der US-PS 2 243 434 sind verschiedene Ausgestaltungen von Lichteintrittsflächen und Reflexionsflächen beschrieben. Auch bei diesen Reflektoren ist weder eine volle Flächenauslegung gegeben noch kann Reflexion in weiten Winkelbereichen erzielt werden.

Bei den bekannten Reflektoren gelang es bisher nicht, das Erfordernis weiter Winkelbereiche mit dem Erfordernis eines hohen Lichtwertes zu vereinen. Entweder erfolgt bei den bekannten Reflektoren keine Retroreflexion schräg einfallender Lichtstrahlen, was jedoch für viele Anwendungszwecke erforderlich ist, oder es sind keine hohen Lichtwerte gewährleistet, weil keine volle optisch wirksame Belegung der Lichteintrittsfläche vorliegt.

Der Erfindung liegt die Aufgabe zugrunde, eine Retroreflektorplatte zu schaffen, die höchste Lichtwerte aufweist und bei der Retroreflexion in einem großen Reflexionswinkelbereich erzielt wird.

Diese Aufgabe wird erfindungsgemäß durch eine Retroreflektorplatte gelöst, die aus einer durchsichtigen Platte mit einer reflektierenden Rückseite besteht, deren Vorderseite nebeneinander angeordnete, gekrümmte Lichteintrittsflächen und deren Rückseite nebeneinander angeordnete, gekrümmte Reflexionsflächen aufweist, und wobei die optische Achse jeder einzelnen Lichteintrittsfläche mit der optischen Achse einer jeweils zugehörigen Reflexionsfläche zusammenfällt und bei senkrechter Parallelprojektion der Lichteintrittsflächen bzw. der Reflexionsflächen auf die Plattenfläche als Grundrißebene die Grundrisse der Reflexionsflächen im Vergleich zu den Lichteintrittsflächen verschiedenen Flächeninhalt haben, die dadurch gekennzeichnet ist, daß jeweils eine Reflexionsfläche einen größeren Flächeninhalt als die zugehörige Lichteintrittsfläche und die andere Reflexionsfläche einen kleineren Flächeninhalt als die zugehörige Lichteintrittsfläche aufweisen.

Die Reflektorplatte weist vorzugsweise zwei unterschiedlich ausgestaltete Reflexionsflächen auf.

Um höchste Lichtwerte zu erreichen, soll die Vorderseite von den Lichteintrittsflächen und die Rückseite von den Reflexionsflächen im wesentlichen voll ausgelegt sein.

Die Lichteintrittsflächen weisen vorzugsweise eine sechseckige Umrißform auf.

Flächeninhalt und Umrißform der Lichteintrittsflächen bzw. Reflexionsflächen sind hier auf die Grundrisse bezogen, die sich bei senkrechter Parallelprojektion der Lichteintrittsflächen bzw. Reflexionsflächen auf die Plattenfläche als Grundrißebene ergeben.

Bei den bekannten Reflektorplatten entspricht die Lichteintrittsfläche entweder der Reflexionsfläche oder die Lichteintrittsfläche ist kleiner als die zugehörige Reflexionsfläche, d. h. ist dieser eingeschrieben. Die erfindungsgemäßen Retroreflektorplatten zeichnen sich hingegen dadurch aus, daß die Lichteintrittsflächen zum Teil größer sind als die Reflexionsflächen, d. h. diesen nicht eingeschrieben sind.

Der vorliegenden Erfindung liegt das Konzept zugrunde, daß auf der Reflexionsseite eine bestimmte Reflexionsfläche sich nicht nur über jenen Bereich erstreckt, der durch die zugehörige Lichteintrittsfläche einschließlich ggf. vorliegender inaktiver Bereiche vorgegeben ist, sondern darüber hinausgeht, und zwar auf Kosten der benachbarten Reflexionsflächen. Dies führt dazu, daß beispielsweise jeweils kleinere und größere Reflexionsflächen bzw. -reihen mit kleineren und größeren Reflexionsflächen alternieren.

Auf diese Weise wird erreicht, daß auch Retroreflexion bei sehr schräg einfallenden Lichtstrahlen, d. h. großen Winkelbereichen, gegeben ist, da die großen Reflexionsflächen, deren Abmessungen im Vergleich zur zugehörigen Lichteintrittsfläche zumindest in einer Richtung erheblich größer sind, auch bei extremen Winkeln das Licht reflektieren. Die kleinen Reflexionsflächen reflektieren demgegenüber in einem engeren Winkelbereich, jedoch in jenem Bereich, in dem der Hauptteil des Lichtes einfällt. Bei den erfindungsgemäßen Retroreflektorplatten ist eine volle Auslegung sowohl der Lichteintrittsseite als auch der Reflexionsseite gewährleistet, so daß höchste Lichtwerte erzielt werden können.

Vorzugsweise liegen zwei unterschiedlich ausgestaltete Reflexionsflächen vor. Bei voller Flächenauslegung ergibt sich dann im Normalfall, daß die beiden unterschiedlich ausgestalteten Reflexionsflächen zusammen im wesentlichen gleichen Inhalt wie die zwei zugehörigen Lichteintrittsflächen haben.

Die Lichteintrittsflächen und die Reflexionsflächen können gleiche Umrißform, beispielsweise die Form von Sechsecken aufweisen. Es kommt jedoch auch eine unterschiedliche Umrißform in Betracht. Beispielsweise können die Lichteintrittsflächen Quadrate und die Reflexionsflächen Achtecke und Quadrate sein.

Die Lichteintrittsseite ist vorzugsweise mit einzelnen, nebeneinander angeordneten, gekrümmten Lichteintrittsflächen voll ausgelegt. Dadurch ist sichergestellt, daß das gesamte auf den Reflektor fallende Licht retroreflektiert werden kann, was nicht der Fall wäre, wenn zwischen den einzelnen Lichteintrittsflächen tote, d. h. optisch inaktive Bereiche vorliegen würden. Eine volle Flächenauslegung ist insbesondere mit Quadraten, Rechtecken, Parallelogrammen und Sechsecken möglich.

Jeder Lichteintrittsfläche ist eine Reflexionsfläche zugeordnet, wobei die optischen Achsen korrespondierender Flächen zusammenfallen.

Im Normalfall liegen die optischen Achsen senkrecht zur Reflektorplatte. Für bestimmte Anwendungen, beispielsweise Bodenmarkierungen, kann es vorteilhaft sein, die optischen Achsen in einem Winkel zur Senkrechten auf der Retroreflektorplatte anzuordnen, um dadurch eine andersartige Reflexionscharakteristik zu erreichen.

Auch die Reflexionsseite der Platte weist vorzugsweise eine volle Flächenauslegung mit einzelnen, nebeneinanderliegenden Reflexionsflächen auf.

In vielen Fällen, beispielsweise bei Retroreflektoren die im Straßenverkehr eingesetzt werden, wird eine optische Wirksamkeit in vorgegebenen Winkelbereichen verlangt. Beispielsweise muß der Winkelbereich bezüglich der Horizontalebene sehr groß, kann jedoch in der Vertikalebene verhältnismäßig klein sein. Mit den erfindungsgemäßen Retroreflektorplatten können solche Forderungen auf beste und einfachste Weise erfüllt werden. Die Winkelbereiche, innerhalb derer der Reflektor optisch wirksam ist, sind in etwa proportional den Abmessungen der Reflexionsflächen. Diese Anpassung an geforderte oder gewünschte Winkelbereiche ist erfindungsgemäß möglich, wobei gleichzeitig eine volle Flächenauslegung sowohl der Eintrittsseite als auch der Reflexionsseite erhalten bleiben.

Um bestimmte Vorzugsbereiche für die Retroreflexion zu schaffen kommt es ferner in Betracht, auch die Flächengeometrie der Lichteintrittsflächen besonders zu gestalten, beispielsweise in Form langgezogener Sechsecke, oder auch den Raster, in dem die Elemente angeordnet sind, zu ändern. Bei solchen Ausgestaltungsformen können bei beidseitig voller Flächenauslegung extremste Winkelbereiche genutzt werden.

Die erfindungsgemäßen Retroreflektorplatten zeichnen sich durch eine optimale Reflexionscharakteristik aus, weil durch Änderung der Flächengeometrie sowohl der Lichteintrittsflächen als auch der Reflexionsflächen relativ zueinander sowie der Rasteranordnung die Reflexionsbereiche in einfacher Weise variiert werden können und der Reflektor somit den geforderten oder gewünschten Bedingungen optimal angepaßt werden kann. Dieses optische System erlaubt eine weitestgehende Variation der Reflexionsbereiche bei Beibehaltung höchster Lichtwerte.

Die Herstellung der Retroreflektorplatte ist äußerst einfach und wirtschaftlich.

Aus fertigungstechnischen Gründen kann es vorteilhaft sein, die Ecken der gekrümmten Reflexionsflächen abzurunden, bzw. abzuflachen, wodurch das Einfallsverhalten lediglich in Extrembereichen beeinflußt wird. Die Vorteile hinsichtlich der Fertigung können jedoch diese unerhebliche Beeinträchtigung in der Optik rechtfertigen.

Die Retroreflektorplatten können in verschiedensten Bereichen Verwendung finden und eignen sich aufgrund ihrer Optik sowie ihrer Unempfindlichkeit im Hinblick auf Witterungseinflüsse insbesondere für den Straßenverkehr.

Die Erfindung wird nachstehend anhand der Zeichnung, die beispielhafte Ausgestaltungen zeigt, näher erläutert. Es zeigt

Fig. 1 eine Draufsicht auf eine Retroreflektorplatte von der Lichteintrittsseite,

Fig. 2 eine Draufsicht auf die Retroreflektorplatte von Fig. 1 von der Reflexionsseite,

Fig. 3 einen Querschnitt längs der Linie A-A in Fig. 1,

Fig. 4 eine Draufsicht auf eine andere Reflektorplatte von der Lichteintrittsseite,

Fig. 5 eine Draufsicht auf die Reflexionsplatte von Fig. 4 von der Reflexionsseite,

Fig. 6 einen Querschnitt längs der Linie A-A in Fig. 4,

Fig. 7 einen Querschnitt durch eine Reflektorplatte.

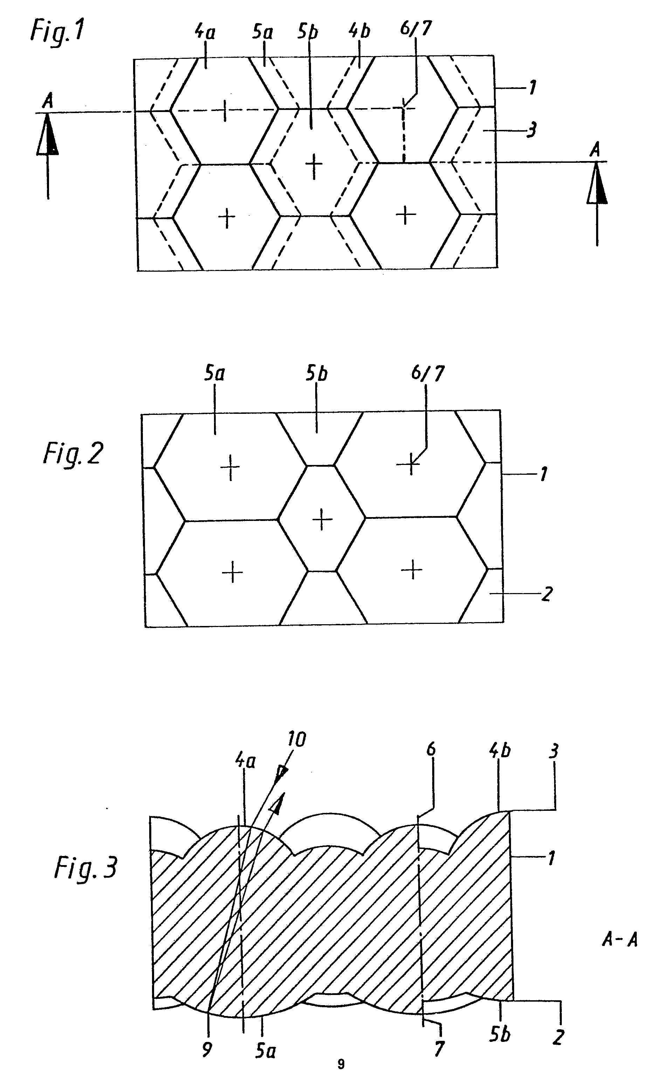

Die in Fig. 1 gezeigte Retroreflektorplatte 1 trägt auf ihrer Vorderseite 3 Lichteintrittsflächen 4a, 4b in Form von Sechsecken.

Die Lichteintrittsflächen 4a, 4b können untereinander gleich sein oder aus Gründen, auf die nachstehend noch eingegangen wird, etwas unterschiedlich ausgestaltet sein.

Jeder Lichteintrittsfläche 4a, 4b ist eine Reflexionsfläche 5a, 5b zugeordnet, wobei die jeweiligen optischen Achsen 6; 7 zusammenfallen. (Die nicht sichtbaren Reflexionsflächen sind in Fig. 1 strichliert eingezeichnet.)

In Fig. 2 ist die Rückseite 2 der Retroreflektorplatte 1 mit den Reflexionsflächen 5a, 5b gezeigt, wobei der Flächeninhalt der Reflexionsflächen 5a erheblich größer ist als jener der Reflexionsflächen 5b.

Fig. 3 zeigt einen Querschnitt längs der Linie A-A der Fig. 1. Auf der Vorderseite 3 der Retroreflektorplatte 1 sind die Lichteintrittsflächen 4a, 4b und auf der Rückseite 2 die Reflexionsflächen 5a, 5b gezeigt. Die optische Achse 6 der Lichteintrittsflächen korrespondiert mit der optischen Achse 7 der Reflexionsflächen. Der einfallende Lichtstrahl 10 wird von der reflektierenden Schicht 9 parallel reflektiert.

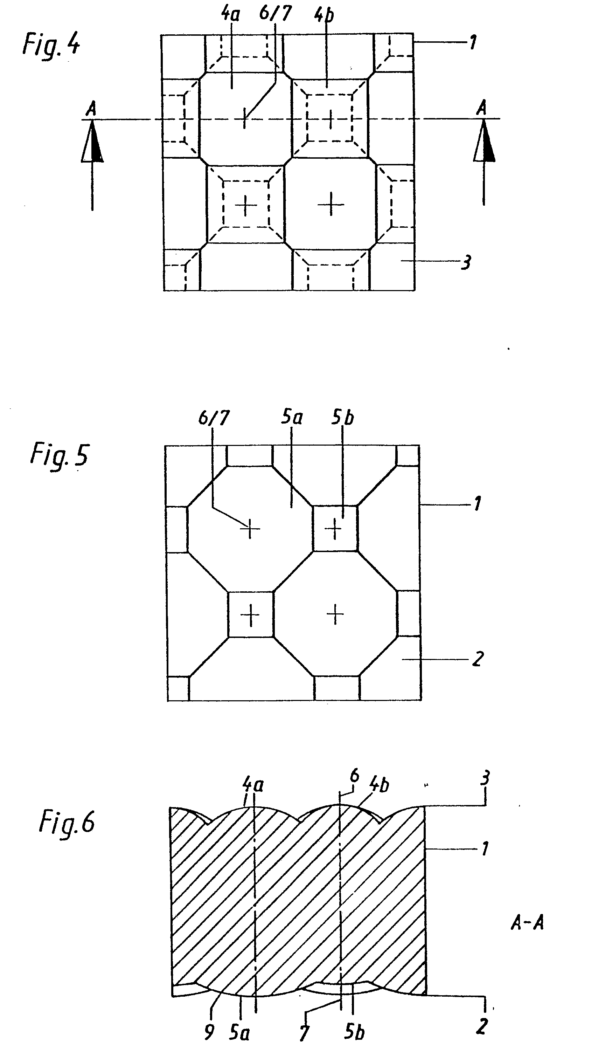

Die Fig. 4, 5 und 6 zeigen weitere Beispiele, wobei die Lichteintrittsflächen 4a, 4b die Form von Quadraten haben, während die Reflexionsflächen 5a, 5b die Umrißform von Achtecken und Quadraten aufweisen.

Wie aus Fig. 4 ersichtlich, können aufgrund der unterschiedlichen Krümmung der Lichteintrittsflächen die Ecken der Quadrate abgeschnitten sein.

Die Optik von Rückstrahlelementen, auf der die Optik der erfindungsgemäßen Retroreflektorplatte basiert, ist bekannt, so daß darauf nicht näher eingegangen werden muß. Beispielsweise ist diese Optik in den vorgenannten Patentschriften beschrieben.

Die Lichteintrittsflächen können sphärisch oder asphärisch gekrümmt sein. Die Reflexionsflächen weisen üblicherweise ebenfalls sphärische Krümmung auf. Die Krümmung der Lichteintrittsflächen ist abhängig vom Brechungsindex des verwendeten Materials und von der gewünschten Streuung des reflektierenden Lichtes.

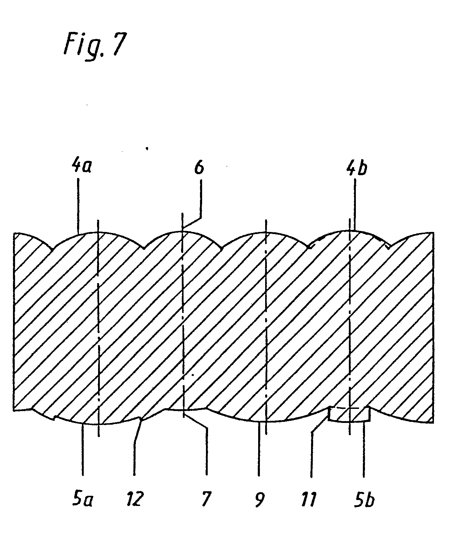

Für große Einfallswinkel, beispielsweise größer als 25°, kann die Ausbildung der Reflexionsflächen als rotationssymmetrischer Stufenspiegel vorteilhaft sein. Dies ist in Fig. 7 gezeigt, wo eine Reflexionsfläche 5a als Stufenspiegel 12 ausgebildet ist.

Bei den in Fig. 2 gezeigten Reflexionsflächen sind die Reflexionsflächen 5a größer als die Reflexionsflächen 5b. Bei optisch gleichen Lichteintrittsflächen ergibt sich wegen der zugrundeliegenden Optik zwangsläufig zwischen den Reflektorflächen eine Stufe. Diese Stufe 11 ist in Fig. 7 gezeigt.

Diese Stufe läßt sich jedoch gewünschtenfalls vermeiden, indem die zugehörigen Lichteintrittsflächen mit kleinerem Krümmungsradius ausgebildet werden. Dies ist in Fig. 7 strichliert angedeutet.

Es ist auch möglich, den Krümmungsradius der Lichteintrittsflächen unverändert zu lassen aber die zugehörigen Lichteintrittsflächen vorstehen zu lassen. Die Scheitel der Lichteintrittsflächen sind dann nicht mehr in der gleichen Ebene.

Durch die erwähnte Änderung der Krümmungsradien jeder zweiten Lichteintrittsfläche ist das Schnittbild der Lichteintrittsflächen nicht mehr gleich, es liegen vielmehr unterschiedlich ausgestaltete Lichteintrittsflächen 4a und 4b vor.

Die beschriebenen Beispiele zeigen Reflexionsplatten, bei denen zwei unterschiedliche Reflexionsflächen 5a, 5b vorliegen. Es ist jedoch auch möglich, den Reflektor so auszugestalten, daß mehr als zwei, beispielsweise 4 unterschiedliche Reflexionflächen gegeben sind.

Als durchsichtiges Material für die Retroreflektorplatte eignen sich insbesondere Kunststoffe wie Polymethylmethacrylat, Acrylgläser, Celluloseester, wie Celluloseacetat und Celluloseacetobytyrat, und Polystyrol. Es kommt ferner in Betracht, die Retroreflektorplatte aus einer Kunststoffolie auszubilden. Der Ausdruck »Platte« soll demgemäß hier auch Folien umfassen.

Die Dicke der Platte hängt im wesentlichen von der gewählten Teilung der Krümmung der optischen Flächen ab. Vorzugsweise liegt die Plattendicke im Bereich von 2 bis 10 mm. Aus Kostengründen wird man die Platten möglichst dünn ausführen.

Die Unterteilung der Lichteintrittsseite des Reflektors in einzelne Lichteintrittsflächen kann in weiten Grenzen und in Abhängigkeit vom Brechungsindex des verwendeten Materials, der Plattendicke und der gewünschten Optik variiert werden.

Die gewählte Teilung bestimmt weitgehend die Höhe der gekrümmten Lichteintrittsflächen. Letztere liegt vorzugsweise im Bereich zwischen 0,5 und 2 mm.

Die reflektierende Schicht 9 kann aus jedem geeignetem reflektierenden Material, insbeson-

dere aufgebrachtem Silber oder Aluminium, bestehen. Es wird jedoch bevorzugt, die Reflexionsschicht in Form einer Aluminiumfolie vorzusehen.

Ein bevorzugtes Verfahren zur Herstellung der Retroreflektorplatten besteht darin, daß in ein Formwerkzeug, beispielsweise ein Spritzgußwerkzeug, eine Metallfolie, beispielsweise eine Aluminiumfolie, die ggf. mit transparentem Kunststoff beschichtet sein kann, eingelegt wird. Anschließend wird der Kunststoff zur Herstellung der Platte in das Formwerkzeug eingebracht. Bei erhöhter Temperatur erfolgt nun gleichzeitig die Ausformung der Kunststoffplatte einschließlich der Metallfolie und die Verbindung des eingebrachten Kunststoffes mit der Metallfolie.

Gemäß einem alternativen bevorzugten Verfahren können die Retroreflektorplatten, ausgehend von einem Kunststoffband mit eingelegter oder damit verbundener Metallfolie hergestellt werden. Dieses Band wird durch Wärmezufuhr verformbar gemacht und in einem geeigneten Formwerkzeug durch Prägen ausgeformt.

Ein weiteres Verfahren besteht darin, aus transparentem Kunststoff mittels Spritzguß die Platten auszuformen und anschließend mit einer reflektierenden Schicht, beispielsweise durch Aufbringen von Aluminium im Hochvakuum, zu versehen.

## Patentansprüche

1. Retroreflektorplatte bestehend aus einer durchsichtigen Platte mit einer reflektierenden Rückseite, deren Vorderseite nebeneinander angeordnete, gekrümmte Lichteintrittsflächen (4a, 4b) und deren Rückseite nebeneinander angeordnete, gekrümmte Reflexionsflächen (5a, 5b) aufweist, und wobei die optische Achse jeder einzelnen Lichteintrittsfläche mit der optischen Achse einer jeweils zugehörigen Reflexionsfläche zusammenfällt und bei senkrechter Parallelprojektion der Lichteintrittsflächen (4a, 4b) bzw. der Reflexionsflächen (5a, 5b) auf die Plattenfläche als Grundrißebene die Grundrisse der Reflexionsflächen (5a, 5b) im Vergleich zu den Lichteintrittsflächen (4a, 4b) verschiedenen Flächeninhalt haben, dadurch gekennzeichnet, daß jeweils eine Reflexionsfläche (5a) einen größeren Flächeninhalt als die zugehörige Lichteintrittsfläche (4a) und die andere Reflexionsfläche (5b) einen kleineren Flächeninhalt als die zugehörige Lichteintrittsfläche (4b) aufweisen.

2. Retroreflektorplatte nach Anspruch 1, dadurch gekennzeichnet, daß sie zwei unterschiedlich ausgestaltete Reflexionsflächen (5a, 5b) aufweist.

3. Retroreflektorplatte nach Anspruch 1 oder 2, dadurch gekennzeichnet, daß die Grundrisse der zwei unterschiedlich ausgestalteten Reflexionsflächen (5a, 5b) zusammen im wesentlichen gleichen Flächeninhalt wie die Grundrisse der zwei zugehörigen Lichteintrittsflächen (4a, 4b) haben.

4. Retroreflektorplatte nach einem der Ansprüche 1 bis 3, dadurch gekennzeichnet, daß die Reflexionsflächen (5) andere Umrißform als die Lichteintrittsflächen (4) aufweisen.

5. Retroreflektorplatte nach einem der Ansprüche 1 bis 4, dadurch gekennzeichnet, daß die unterschiedlichen Reflexionsflächen (5a, 5b) verschiedene Umrißform aufweisen.

6. Retroreflektorplatte nach einem der Ansprüche 1 bis 5, dadurch gekennzeichnet, daß die Vorderseite (3) von den Lichteintrittsflächen (4) im wesentlichen voll ausgelegt ist.

7. Retroreflektorplatte nach einem der Ansprüche 1 bis 6, dadurch gekennzeichnet, daß die Rückseite (2) von den Reflexionsflächen (5) im wesentlichen voll ausgelegt ist.

8. Retroreflektorplatte nach einem der Ansprüche 1 bis 7, dadurch gekennzeichnet, daß sie unterschiedlich ausgestaltete Lichteintrittsflächen (4a, 4b) mit unterschiedlichem Krümmungsradius aufweist.

9. Retroreflektorplatte nach Anspruch 8, dadurch gekennzeichnet, daß sie zwei unterschiedlich ausgestaltete Lichteintrittsflächen (4a, 4b) aufweist.

10. Retroreflektorplatte nach einem der Ansprüche 1 bis 9, dadurch gekennzeichnet, daß die Grundrisse der Lichteintrittsflächen (4) eine sechseckige, quadratische oder rechteckige Umrißform aufweisen.

11. Retroreflektorplatte nach einem der Ansprüche 1 bis 10, dadurch gekennzeichnet, daß die Grundrisse der Reflexionsflächen (5) eine rechteckige Umrißform aufweisen.

12. Retroreflektorplatte nach einem der Ansprüche 1 bis 11, dadurch gekennzeichnet, daß die Ecken (8) der Umrißformen der Reflexionsflächen (5) abgerundet sind.

13. Retroreflektorplatte nach einem der Ansprüche 1 bis 12, dadurch gekennzeichnet, daß die optischen Achsen (7) in einem Winkel zur Senkrechten auf die Retroreflektorplatte (1) angeordnet sind.

14. Retroreflektorplatte nach einem der Ansprüche 1 bis 13, dadurch gekennzeichnet, daß sie aus einer durchsichtigen Kunststoffplatte oder Kunststoffolie besteht.

## Claims

1. A retroreflector plate comprising a transparent plate with a reflective back, the front exhibiting curved light entry surfaces (4a, 4b) arranged beside one another and the back exhibiting curved reflective surfaces (5a, 5b) arranged beside one another, and whereby the optical axis of each individual light entry surface coincides with the optical axis of a reflective surface assigned to it and the outlines of the reflective surfaces (5a, 5b) have different areas to those of the light entry surfaces (4a, 4b) in the case of vertical parallel projection of the light entry surfaces (4a, 4b) or the reflective surfaces (5a, 5b) onto the plate surface as the plane of horizontal projection, characterized in that one reflective surface (5a) has a larger area than the corresponding light enry surface (4a) in each case and the other reflective surface (5b) has a smaller area than the corresponding light entry surface (4b).

2. The retroreflector plate according to claim 1, characterized in that it comprises two reflective surfaces (5a, 5b) of different designs.

3. The retroreflector plate according to claim 1 or 2, characterized in that the outlines of the two reflective surfaces (5a, 5b) of different designs together have substantially the same area as the outlines of the two corresponding light entry surfaces (4a, 4b).

4. The retroreflector plate according to any of claims 1 to 3, characterized in that the reflective surfaces (5) have a different peripheral shape than the light entry surfaces (4).

5. The retroreflector plate according to any of claims 1 to 4, characterized in that the different reflective surfaces (5a, 5b) have different peripheral shapes.

6. The retroreflector plate according to any of claims 1 to 5, characterized in that the front (3) is substantially lined completely with the light entry surfaces (4).

7. The retroreflector plate according to any of claims 1 to 6, characterized in that the back (2) is substantially lined completely with the reflective surfaces (5).

8. The retroreflector plate according to any of claims 1 to 7, characterized in that is comprises light entry surfaces (4a, 4b) of different designs with different radii of curvature.

9. The retroreflector plate according to claim 8, characterized in that is comprises two light entry surfaces (4a, 4b) of different designs.

10. The retroreflector plate according to any of claims 1 to 9, characterized in that the outlines of the light entry surfaces (4) have a hexagonal, square or rectangular peripheral shape.

11. The retroreflector plate according to any of claims 1 to 10, characterized in that the outlines of the reflective surfaces (5) have a rectangular peripheral shape.

12. The retroreflector plate according to any of claims 1 to 11, characterized in that the corners (8) of the peripheral shapes of the reflective surfaces (5) are rounded.

13. The retroreflector plate according to any of claims 1 to 12, characterized in that the optical axes (7) are arranged at an angle to the perpendicular of the retroreflector plate (1).

14. The retroreflector plate according to any of claims 1 to 13, characterized in that it is made of a transparent synthetic plate or synthetic film.

**Revendications**

1. — Plaque de catadioptre constituée par une plaque transparente présentant une face arrière réfléchissante et dont la face avant présente des surfaces courbes réceptrices de lumière (4a, 4b) adjacentes cependant que sa face arrière présente des surfaces réfléchissantes courbes (5a, 5b) adjacentes, que l'axe optique de chaque surface réceptrice coïncide avec l'axe optique de la surface réfléchissante associée, et qu'en projection parallèle perpendiculaire des surfaces réceptrices de lumière (4a, 4b) et/ou des surfaces réfléchissantes (5a, 5b) sur la surface de la plaque en tant que plan de projection, les projections des surfaces réfléchissantes (5a, 5b) présentent des superficies différentes de celles des surfaces réceptrices de lumière (4a, 4b), caractérisé en ce que l'une des surfaces réfléchissantes (5) présente une superficie plus grande que celle de la surface réceptrice associée (4a), cependant que l'autre surface réfléchissante (5b) présente une superficie plus petite que celle de la surface réceptrice associée (4b).

2. — Plaque de catadioptre selon la revendication 1, caractérisée en ce qu'elle comporte deux surfaces réfléchissantes (5a, 5b) de configurations différentes.

3. — Plaque de catadioptre selon la revendication 1 ou 2, caractérisée en ce que les projections des deux surfaces réfléchissantes (5a, 5b) de configurations différentes, Présentent ensemble sensiblement la même superficie que les projections des deux surfaces réceptrices (4a, 4b) associées.

4. — Plaque de catadioptre selon une des revendications 1 à 3, caractérisée en ce que les surfaces réfléchissantes (5) présentent un contour différent de celui des surfaces réceptrices (4).

5. — Plaque de catadioptre selon une des revendications 1 à 4, caractérisée en ce que les différentes surfaces réfléchissantes (5a, 5b)présentent des contours différents.

6. — Plaque de catadioptre selon une des revendications 1 à 5, caractérisé en ce que la face avant (3) est occupée sensiblement dans sa totalité par les surfaces réceptrices de lumière (4).

7. — Plaque de catadioptre selon une des revendications 1 à 6, caractérisée en ce que la face arrière (2) est occupée sensiblement dans sa totalité par les surfaces réfléchissantes (5).

8. — Plaque de catadioptre selon une des revendications 1 à 7, caractérisée en ce qu'elle comporte des surfaces réceptrices de lumière de configurations différentes (4a, 4b) qui présentent des rayons de courbure différents.

9. — Plaque de catadioptre selon la revendication 8, caractérisée en ce qu'elle comporte deux surfaces réceptrices (4a, 4b) présentant des configurations différentes.

10. — Plaque de catadioptre selon une des revendication 1 à 9, caractérisée en ce que les projections des surfaces réceptrices de lumière (4) présentent une configuration hexagonale, carrée ou rectangulaire.

11. — Plaque de catadioptre selon une des revendications 1 à 10, caractérisée en ce que les projections des surfaces réfléchissantes (5) présentent une configuration rectangulaire.

12. — Plaque de catadioptre selon une des revendications 1 à 11, caractérisée en ce que les arêtes (8) des contours des surfaces réfléchissantes (5) sont arrondies.

13. — Plaque de catadioptre selon une des revendications 1 à 12, caractérisée en ce que les axes optiques (7) forment un angle avec la perpendiculaire à la plaque de catadioptre (1).

14. — Plaque de catadioptre selon une des revendications 1 à 13. caractérisée en ce qu'elle est formée d'une plaque ou feuille de matière synthétique transparente.

7

**0 029 611**

Fig.1

Fig.2

Fig.3

A-A

Fig. 4

4a    6/7    4b

A                                    A

1

3

Fig. 5

6/7    5a    5b

1

2

Fig. 6

4a    6    4b    3

1

A-A

9    5a    7    5b    2

# Fig. 7